# EUROPEAN PATENT APPLICATION

(11) **EP 1 603 134 A1**
(43) Date of publication of application: **07.12.2005**
(21) Application number: 04425397.9
(22) Date of filing: 31.05.2004
(51) Int. Cl.: G11B 27/30, G11B 20/12

(54) **METHOD TO IMPROVE DATA RELIABILITY ON HARD DISK DRIVE SYSTEMS**

(71) Applicant: STMicroelectronics S.r.l., 20041 Agrate Brianza (Milano) (IT)
(72) Inventor: Dati, Angelo, 27100 Pavia (IT); Rossi, Augusto Andrea, 27100 Pavia (IT); Giovenzana, Davide, 20052 Monza (IT)
(74) Representative: Botti, Mario

(57) **Abstract**

A method to improve data reliability on Hard Disk Drive systems wherein user data items are distributed across a set of independent sectors and appended to a header in order to ensure adequate signal amplitude and synchronization and wherein a first timing recovering phase is achieved to recover proper signal amplitude acquiring phase and frequency lock by a preamble field and a subsequent frame synchronous detection phase acquiring a sync mark field. The method takes advantage of at least a data sector comprising a first header including a first preamble and a first sync mark field and a second header including a second preamble and a second sync mark field.

## Description

### Field of application

The present invention, in its most general aspect, relates to data reliability on Hard Disk Drive systems.

More particularly, this invention relates to a method to improve data reliability on Hard Disk Drive systems wherein user data items are distributed across a set of independent sectors and appended to a header in order to ensure adequate signal amplitude and synchronization and wherein a first timing recovering phase is achieved to recover proper signal amplitude acquiring phase and frequency look by a preamble field and a subsequent frame synchronous detection phase acquiring a sync mark field.

### Prior art

As is well known in this specific technical field, data reliability is always a major concern in hard disk drive systems.

Increased storage capacity requires continuous evolution of data protection techniques, which are generally regarded in any new system generation as enhanced error correction coding schemes.

User data are normally protected with redundant information in order to ensure data integrity through time regardless of noisy and defective media support, mechanical shocks and system aging.

Each user data item is conveniently distributed across a set of independent frames of regular format - called sectors - each one bearing typically a payload of 512 user eight-bit bytes. The distribution in sectors is generally handled by the system operating the physical drive.

Apart from the need of error correction redundancy, data need to be appended to a fixed format header in order to ensure adequate signal amplitude and synchronization, just to mention two of the various operations that are indispensable for a proper synchronous detection systems.

In the following lines we will distinguish "timing recovery" from "frame synchronization", denoting with the first idiomatic form the process through which the optimal sampling phase and frequency are achieve, and with the second idiomatic form the process used to identify the starting position of the payload (data) field within the frame.

Since frame synchronization relies on the synchronous detection of a known pattern, known as "sync mark", it is apparent that it cannot happen unless timing has been recovered.

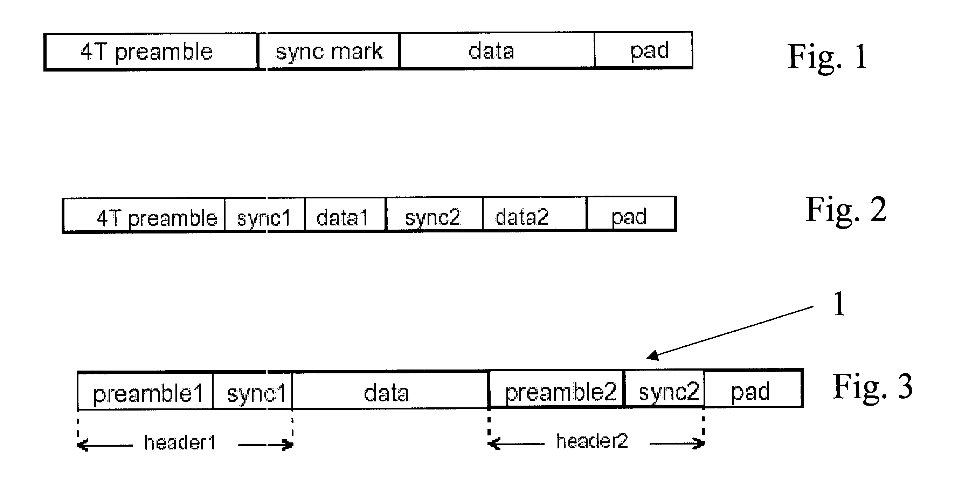

The general structure of a data sector is shown in figure 1 (note that field sizes in the picture do not conform to their relative size), where four distinct fields are reported:

4T Preamble: a known magnetization pattern, '1100' - with '1' and '0' denoting the two elementary tiles, equal in size and of opposite magnetization used to record any data pattern - is repeated several times always with the same phase. This field is used to acquire phase and frequency lock, and to recover proper signal amplitude;

Sync Mark: this is a pattern known a priori by the system and generally not sector specific. It is written immediately after the preamble to mark the onset of the data field.

Data: in this section are housed the sector payload, generally protected by the error correction code.

Pad: This is an appendix generally used for data flush through the signal processing pipeline and inter sector separation.

With every new HDD system evolution, signal processing needs to evolve to compensate signal to noise ratio reduction due to increased storage and faster data access demand; from signal processing standpoint, data reliability is strengthened evolving the error correction code (ECC) properties of the data field (we will customarily refer to the ECC through the rest of the description as a general coding and detection strategy without specifying further details).

This approach assumes however that the header recovery failure does not jeopardize the system performance even in the noisier scenario.

In general it is assumed that the header can be always lengthened for an increased robustness, but even though this is generally true, it bears a data format penalty which should be considered with the same importance of the ECC redundancy budget.

To better analyze data irrecoverably, we will take into account only the main problems experienced by the HDD industry and for which a solution has been provided in order to successfully recover a sector:
1) a synchronous lock to the read-back signal needs to be reliably achieved, and kept;
2) if lock is achieved, at least over the sector onset, Sync Mark detection can succeed;
3) with lock maintained across the whole frame, and Sync Mark correctly identified, data are recovered up to the ECC recovery capability.

We can summarize the above items using the following formulas:$\text{P (no recovery)= P (lock lost) + P (sync lost, locked)+...} \text{... + P (ECC overwhelmed, {locked and syncronized})}$ using conditional probabilities, and exploiting previous observations 1-3 we have:$\text{P (no recovery)=P (lock lost) +...} \text{... +P (sync lost / locked )*{1- P (lock lost) } + ...} \text{... + P (ECC overwhelmed/synchronized) * P(synchronized / locked)*...}$$\text{...*{1 -P (lock lost)}}$ and finally:$\text{P (no recovery ) =P(lock lost) +...} \text{... +P (sync lost/ locked )* { 1- P (lock lost)}+...} \text{...+P(ECC overwhelmed/synchronized)*{1-P(sync lost)} *{ 1 -P(lock lost)}}$ which simplifies to:$\text{P (no recovery) =P (lock lost) +P (sync lost /locked) +...} \text{... +P (ECC overwhelmed/ locked and syncronized) =} {\text{P}}_{\text{LOL}} {\text{+ P}}_{\text{SYNC}} {\text{+ P}}_{\text{ECC}}$ provided that each one of the three terms is well under unity - requirement comfortably satisfied in applications.

From this analysis it is apparent that any coding and detection breakthrough that improves P_{ECC} only is practically useless unless both P_{LOL} and P_{SYNC} are not improved as well.

Referring now to the first two term P_{LOL} and P_{SYNC} of the equation [1], we will discuss each one separately.

Timing synchronization is achieved through a digital second order phase lock loop. The dilemma is to balance properly the 4T preamble field length with additional hardware complexity investment. Given the system trend of fading SNR - due to the availability of increasingly efficient ECC protection - more complex timing lock algorithms are required, without however degrading the hardware speed performance.

Any addition to the timing gradient estimation complexity faces almost unavoidably an increment of loop latency, which bears severe consequences on system performance. The latency increase can only partially compensated altering the open loop PLL response.

As shown for instance in the reference "Effect of Loop Delay on Stability of Discrete-Time PLL" [J.W.M. Bergmans, IEEE Trans. Circuit and Systems, vol. 42, no. 4, April 1995] the acquisition speed degrades severely with additional latency in PLLs, vanishing practical advantages on the frame format of improved algorithms.

Open loop approaches - such as phase restart techniques - are only usable for precise phase estimation, but not for frequency mismatch tracking.

For instance, to estimate reliably frequency offset of 0.1%, around 10³ samples are needed. Assuming a 10% ECC redundancy, we have 512x8x1.1 = 4506 samples for the data field only. A practical goal for the whole header is to be around 5% of the data section, which is ~ 226 samples, less than 25% of the 10³ figure.

For the second P_{SYNC} term of the equation [1], a known solution is to modify the figure 1 format as shown in figure 2.

Note that field sizes in the picture do not conform to their relative size. A practical ratio between the two data file sizes is length(data1)/length(data2) ~ 20/390 - 0.05. The two sync fields are generally of comparable length.

There are two Sync Mark fields, separated by a data sandwich.

The length of each Sync Mark field is approximately the same as the Sync Mark field of figure 1.

Through lengthening a Sync Mark field is generally possible to exceed comfortably target specifications for P_{SYNC} in normal noisy conditions with patterns shorter than 30 bits, and it is fair to say that denoting with sync0 the sync pattern used in a figure 1 format such as:$\text{length(sync0) = length(sync1) + length(sync2)}$ is possible to match at least the frame synchronization performance of figure 2 scheme.

Generally a catastrophic loss of the Sync Mark is due to an undetected media defect localized over the Sync Mark area. This event can have a likelihood P_{Defect} greater than P_{SYNC}.

By splitting the Sync Mark field using a chunk of data, ensures that only extremely long - and extremely unlikely - media defects can simultaneously destroy both synchronization features. In this case, as long as P_{Defect} > P_{SYNC} > (P_{Defect})² the scheme is effective.

In general P_{Defect} is a function of the defect length. A 'defect scan' performed over each disk surface at least at manufacturing time ensures that defective disk areas are not used for data storage.

The longer the defect, generally the most effective is its reliable location: in fact, a long defect will yield the largest energy fluctuation with respect to a correctly magnetized media.

Distance between sync1 and sync2 patterns depends on which is the longest undetected defect which can be assumed as rare as P_{SYNC} and on maximum ECC recovery capability, given that in case of sync1 loss the data chunk data1 has to be totally inferred from redundancy over the data2 field. Using just this second argument, we could assume a maximum separation of around 20*8 = 400 bit between the two.

Notice there is no preamble section dedicated to sync2 field: this to reduce format penalization.

Still using defect arguments, it is however possible that the defect that caused the loss of the first Sync Mark pattern in the frame also eroded the last preamble section, thus weakening the timing acquisition.

In this case we cannot say that the second Sync Mark pattern is unaffected by the defect over the first one, as it cannot be guaranteed a correct synchronization over this section which is yet in the first section of the frame.

Furthermore, burdening the ECC system with the task of recovering from scratch the sandwich data section data1 prevents optimal ECC protection allocation along the rest of the payload field data2.

Moreover, current loop architecture cannot cope with increasing data rates without degrading performance. For instance, a known solution disclosed in the EP application No. 0 898 373 provides an improvement margin that is not substantial, despite a long research effort.

### Summary of the invention

The problem underlying the present invention is that of providing a method to improve data reliability on Hard Disk Drive systems able to overcome, in a simple and economical way, all of drawbacks quoted with reference to the prior art.

This problem is solved, according to the present invention, by a method to improve data reliability on Hard Disk Drive systems that is defined in the enclosed claim 1.

The advantages and characteristics of the method to improve data reliability on Hard Disk Drive systems, according to the present invention, will become clearer from the description of an embodiment thereof, made hereinafter with reference to the attached drawings given for indicative and not limiting purposes.

### Brief description of the drawings

Figure 1 schematically shows an Hard Disk Drive (HDD) data sector format, known in the prior art.
Figure 2 schematically shows an alternative Hard Disk Drive (HDD) data sector format, known in the prior art.
Figure 3 schematically shows an Hard Disk Drive (HDD) data sector format, according to the present invention.

### Detailed description of a preferred embodiment

With specific reference to figure 3, a method to improve data reliability on Hard Disk Drive systems in accordance with the present invention is disclosed making reference to a Hard Disk Drive (HDD) data sector format globally indicated with 1.

In an HDD system both disk writer and reader are normally embedded in the same platform, hence it is possible to alter the header structure.

Using the same total header length as in figure 2, the present invention suggests to provide the data sector as in the scheme of Figure 3 wherein the first header1 includes a first preamble and a first sync1 marc field and a second header2 includes a second preamble and a second sync2 mark field. The first header1 and the second header2 are separated by a data sandwich.

In this respect, it's important to note that field sizes in the picture do not conform to their relative size.

This inventive format allows the joint improvement of the equation [1] P_{LOL} and P_{SYNC} terms.

Whereas the decoding sequence of all figure 1 frame components - and of all figure 2 frame components as well, with the possible exception of data1 field - reflects the same order in which are written, in the scheme of figure 3 it is possible to start decoding the data section only after sync2 detection.

This strategy implies a buffer capability in the system not required in any scheme of the prior art. In practice, there is a need to store at least two sectors, to be able to acquire a new sector while processing the previous one.

The invention provides an improvement in the timing lock capabilities.

The distance in samples between the two header1 and header 2 sections is known and predetermined; the phase estimate over each preamble section is independent and adequate to detect reliably each Sync section.

With this scheme the recovering of a frequency mismatch over each preamble section is not pursued, hence just an open loop technique and/or a first order PLL can be used.

The two sync1 and sync2 fields mark the distance between the two preamble sections.

By comparing the measured distance in sampling clock cycles with respect to the expected we can get an open loop precise estimate of the average frequency mismatch over the sector.

As the distance between the two 4T preambles is at least 1/(8*512) ~ 0.24x10⁻³ a frequency offset of 0.02% yields phase shift which is easily detectable.

The residual and localized timing jitter can then be tracked and compensated effectively through re-sampling with a simpler first order PLL, which can use an higher bandwidth and implemented also with smaller overall latency.

The invention further provides an improvement in the frame synchronization.

The two sync fields provide, as in the scheme of figure 2, an independent reference each, thus enabling the same level of defect protection as in the previous case.

Indeed, separation now spans the whole data sector, and there is no further need to consider average defect length to determine the 'adequate' gap size.

Each field relies on its own preamble for timing closure, hence the two header detection is truly independent.

However, in case of one of the fields is not recovered, it is not possible to benefit on the timing lock protection using the 'open loop' frequency estimator. In this case we have two options:
a) using the estimate of one of the two 4T preamble sections: given that we would know which is the failing sync section, we will assume the other as 'defect free' and use that estimate for the frequency error. Alternatively, we can use the average of frequency error estimate of both fields.
b) adding an additional weak sync feature in each preamble, separated from the sync mark onset in each header by at least the size of the longest defect type with mis-detection likelihood of at least P_{SYNC}.

For the first case (a) when hit by a sync loss, the system must rely on a weaker lock robustness, as each preamble field is now about half the size of the original figure 1 one: this can be acceptable as we can rewrite P_{LOL} as:${\text{P}}_{\text{LOL}} \text{=P{no lock, no defect happened}+P{no lock, a sync feature with defect}=...} {\text{... =P { no lock, no defect happened }+P { no lock | defect} *P}}_{\text{Defect}}$ where the case where it is necessary to rely only on half the preamble corresponds to the second term, hence mitigated by the defect likelihood itself.

For the second case (b), a sync feature is simply inserted by a phase rotation in the preamble. In fact, looking at the 4T preamble field, the sequence 1100 is always repeated with the same phase.

Denoting as pre = [1100], -pre = [0011], and rep_{N}(pat) the sequence {pat, pat, ..., pat} with pattern pat repeated exactly N times, we have for a conventional 4T preamble:${\text{[4T] =rep}}_{\text{N}} \text{(pre)}$ an alternative preamble shape proposed is:${\text{[4T ALT] ={ rep}}_{\text{N-M}} {\text{(pre), rep}}_{\text{M}} \text{(-pre)}}$ Reference is now made to the phase inversion feature as a weak sync mark. Part of the discussion used for the figure 2 frame is repeated:$\text{P { sync loss} =P { main sync loss, weak sync loss }=...} \text{... =P { weak sync loss | main sync loss } *P { main sync loss }=...} {\text{P { weak sync loss }*P{ main sync loss } ≈ P { weak sync loss }*P}}_{\text{Defect}}$

It is readily seen that it is only necessary to require:${\text{P { weak sync loss } ≤ P}}_{\text{SYNC}} {\text{/P}}_{\text{Defect}}$

As clearly reported in the above notes, the method according to the present invention has the great advantage of obtaining a more robust synchronization.

A HDD System implementing the inventive method performance depends mainly on:
1- Loops Lock (mainly timing) over the whole sector frame;
2- Correct Frame synchronization (address mark recovery);
3- Reliable detection (Viterbi and ECC).

System Failure Probability is roughly:$\text{P(Fail) = P(Lock Loss) + P(AM miss) + P(too many err)}$ Target P(Fail) is around 1E-12 after ECC.

Channel needs to operate at least above bit error rate (BER) 1 E-4 because while the ECC could cope with more errors, timing lock is lost too often.

With the method of the present invention PGR is available on both ends of data sector, and interpolate for frequency errors. No closed loop operation is requested.

All loops are handled in digital form, using Maximum Likelihood prediction criteria (yielding further improvement in robustness).

Breaking any feedback makes block assembly far easier and improves overall design robustness, for instance all block on the data path operating on a request/acknowledgment protocol.

The system allows single frequency operation with only burden of storing the whole sector frame. In practice, we need to store at least two, to be able to acquire a new sector while processing the previous one.

The method to improve data reliability on Hard Disk Drive systems, just described, is susceptible to other variations and modifications, all within reach of the skilled in the art and, as such, covered by the scope of protection of the present invention defined in the following claims.

## Claims

1. Method to improve data reliability on Hard Disk Drive systems wherein user data items are distributed across a set of independent sectors and appended to a header in order to ensure adequate signal amplitude and synchronization and wherein a first timing recovering phase is achieved to recover proper signal amplitude acquiring phase and frequency leek lock by a preamble field and a subsequent frame synchronous detection phase acquiring a sync mark field, **characterized by** at least a data sector comprising a first header including a first preamble and a first sync mark field and a second header including a second preamble and a second sync mark field.

2. Method according to claim 1, wherein the distance in samples between the first and the second header is predetermined.

3. Method according to claim 1, wherein the two sync fields mark the distance between the two preamble sections.

4. Method according to claim 1, wherein the decoding phase of the data section is started only after the second sync mark field detection.

5. Method according to claim 1, wherein each field relies on its own preamble for timing closure so that each header detection is independent.

6. Method according to claim 1, wherein the HDD System includes a buffer capability for acquiring a new sector while processing the previous one.

7. Method according to claim 3, wherein a comparing phase is performed by measuring the distance in sampling clock cycles with respect to the expected distance, thus obtaining an open loop precise estimate of the average frequency mismatch over a sector.

8. Method according to claim 1, wherein the first and second sync mark fields provide each an independent reference, thus enabling a same level of defect protection.

9. Method according to claim 1, wherein a sync feature is simply inserted by a phase rotation in the preamble in case of a missing timing lock protection using the 'open loop' frequency estimator.
